# EUROPÄISCHE PATENTSCHRIFT

(11) **EP 1 849 324 B1**
(45) Veröffentlichungstag und Bekanntmachung des Hinweises auf die Patenterteilung: **29.09.2010**
(21) Anmeldenummer: 05825177.8
(22) Anmeldetag: 22.12.2005
(51) Int. Cl.: H04W 72/04, H04L 12/28

(54) **DYNAMISCHE ZUWEISUNG VON FUNKRESSOURCEN IN EINEM MEHRTRÄGERKOMMUNIKATIONSSYSTEM**
DYNAMIC ALLOCATION OF RADIO RESOURCES IN A MULTICARRIER COMMUNICATION SYSTEM
AFFECTATION DYNAMIQUE DE RESSOURCES DANS UN SYSTEME DE COMMUNICATION A PORTEUSES MULTIPLES

(30) Priorität: 17.02.2005 DE 102005007326
(43) Veröffentlichungstag der Anmeldung: 31.10.2007
(73) Patentinhaber: SIEMENS AKTIENGESELLSCHAFT, 80333 München (DE)
(72) Erfinder: EINHAUS, Michael, 52064 Aachen (DE); HALFMANN, Rüdiger, 67697 Otterberg (DE); LOTT, Matthias, 82152 Planegg (DE); WECKERLE, Martin, 89077 Ulm (DE)
(86) Internationale Anmeldenummer: PCT/EP2005/057071
(87) Internationale Veröffentlichungsnummer: WO 2006/087047

(56) Entgegenhaltungen:
- EP-A- 1 324 509
- EP-A- 1 608 193
- US-A1- 2002 147 017
- US-A1- 2002 196 732
- US-A1- 2004 131 025

## Beschreibung

Die Erfindung betrifft ein Verfahren zur Kommunikation in einem Funkkommunikationssystem, bei welchem ein in eine Mehrzahl an Subträgern aufgeteiltes Frequenzband verwendet wird und Nachrichten über mehrere Sprünge übertragen werden. Weiterhin betrifft die Erfindung Funkstationen zur Durchführung des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Funkstation übertragen. Bei den Funkstationen kann es sich hierbei je nach konkreter Ausgestaltung des Funkkommunikationssystems um verschiedenartige teilnehmerseitige Funkstationen oder netzseitige Funkstationen wie Repeater, Funkzugangspunkte oder Basisstationen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Über die WLAN Funkzugangspunkte kann eine Anbindung an andere Kommunikationssysteme, so z.B. an das Internet, erfolgen. Hierzu kommunizieren die Funkstationen des WLAN entweder direkt mit einem Funkzugangspunkt oder bei weiter entfernten Funkstationen über andere Funkstationen, welche die Informationen zwischen der Funkstation und dem Funkzugangspunkt über einen Pfad zwischen der Funkstation und dem Funkzugangspunkt weiterleiten.

Funkstationen können nur dann direkt miteinander kommunizieren, wenn sie sich beide im Funkabdeckungsbereich der jeweils anderen Funkstation befinden. Ist eine direkte Kommunikation nicht möglich, so können Nachrichten zwischen diesen Funkstationen über andere Funkstationen, welche - indem sie die Nachrichten weiterleiten - als Relay-Funkstationen fungieren, übertragen werden. Eine derartige Nachrichtenweiterleitung kann, abhängig von der konkreten Ausgestaltung des Funkkommunikationssystems, sowohl von teilnehmerseitigen als auch von netzseitigen Funkstationen durchgeführt werden. Nachrichten können beispielsweise in einem WLAN zwischen einem Funkzugangspunkt und weit von dem Funkzugangspunkt entfernten teilnehmerseitigen Funkstationen über mehrere Sprünge weitergeleitet werden. Auch in einem Adhoc-Modus eines Funkkommunikationssystems können teilnehmerseitige Funkstationen über einen oder mehrere Sprünge (Hop bzw. Multihop) miteinander kommunizieren, ohne dass vermittelnde Einrichtungen wie z.B. Basisstationen oder Funkzugangspunkte zwischengeschaltet werden. Bei einer Nachrichtenübertragung von einer teilnehmerseitigen Funkstation an eine andere teilnehmerseitigen Funkstation außerhalb ihres Funkabdeckungsbereiches werden die Nachrichten von anderen teilnehmerseitigen Funkstationen weitergeleitet, welche somit als Relay-Funkstationen fungieren. Um eine möglichst effiziente Übertragung von Daten zu erreichen, zerlegt man das gesamte zur Verfügung stehende Frequenzband in mehrere Subträger (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Dies hat u.a. den Vorteil, dass die am Empfänger erforderliche Komplexität reduziert werden kann. Ferner ermöglicht die Aufteilung der verfügbaren Bandbreite in mehrere schmalbandige Subträger eine deutlich höhere Granularität der Datenübertragung hinsichtlich der Verteilung der zu übertragenden Daten auf die unterschiedlichen Subträger, d.h., die Funkressourcen können mit einer großen Feinheit auf die zu übertragenden Daten bzw. auf die Teilnehmerstationen verteilt werden. Insbesondere bei Übertragungen mit variabler Datenrate oder bei burstartigem Datenverkehr kann die verfügbare Bandbreite durch die Zuweisung einer Anzahl von Subträgern an unterschiedliche teilnehmerseitige Funkstationen effizient ausgenutzt werden.

Ein Beispiel für ein Mehrträgerübertragungsverfahren ist OFDM (Orthogonal Frequency Division Multiplexing) System, bei welchem für die Subträger zeitlich annähernd rechteckige Pulsformen verwendet werden. Der Frequenzabstand der Subträger wird derart gewählt, dass im Frequenzraum bei derjenigen Frequenz, bei welcher das Signal eines Subträgers ausgewertet wird, die Signale der anderen Subträger einen Nulldurchgang aufweisen. Somit sind die Subträger orthogonal zueinander. Durch den meist sehr geringen Abstand der Subträger und der Schmalbandigkeit der auf den einzelnen Subträger übertragenen Signale bei OFDM soll gewährleistet werden, dass die Übertragung innerhalb der einzelnen Subträger im allgemeinen nicht frequenzselektiv ist. Dies vereinfacht am Empfänger die Signalentzerrung.

Das Dokument US 2002/0196732 A1 beschreibt eine OFDM-Übertragung zwischen Knoten eines Netzes, welche über Strom leitungen verbunden sind. Jedem Knoten ist ein Frequenzset zur Versendung und ein Frequenzset zum Empfang zugewiesen. Jeder Knoten fungiert als Relay für empfangene Nachrichten, welche nicht für den jeweiligen Knoten bestimmt sind. Die Zuweisung der Frequenzen erfolgt, indem jeder Knoten sich die Frequenzen selbst zuweist, oder indem die Frequenzen zuvor in die Knoten programmiert werden.

Der Erfindung liegt die Aufgabe zugrunde, ein Verfahren zur Kommunikation per Funk vorzustellen, bei welchem ein in eine Mehrzahl an Subträgern aufgeteiltes Frequenzband verwendet wird und Nachrichten über mehrere Sprünge übertragen werden. Weiterhin sollen Vorrichtungen zur Durchführung des Verfahrens aufgezeigt werden.

Diese Aufgabe wird durch ein Verfahren mit den Merkmalen des Anspruchs 1 und durch Funkstationen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Kommunikation in einem Funkkommunikationssystem wird zur Kommunikation ein in eine Mehrzahl von Subträgern aufgeteiltes Frequenzband verwendet. Es werden Nachrichten zwischen einer ersten Funkstation und einer zweiten Funkstation über Funk über mehrere Sprünge zwischen jeweils benachbarten Funkstationen übertragen. Erfindungsgemäß wird für jeden Sprung eine Teilmenge der Subträger verwendet, und die Zusammensetzung von zumindest einer der verwendeten Teilmengen variiert mit der Zeit.

Bei dem betrachteten Funkkommunikationssystem handelt es sich um ein Mehrträgersystem, als Übertragungsverfahren kann zum Beispiel OFDM zum Einsatz kommen. Nachrichten werden zwischen einer ersten und einer zweiten Funkstation über zumindest eine weitere Funkstation, d.h. über zumindest zwei Sprünge, übertragen. Bei den Funkstationen kann es sich um netzseitige oder teilnehmerseitige, stationäre oder mobile Funkstationen handeln. Insbesondere kann es sich bei den Funkstationen, über welche die Sprünge bzw. der Pfad zwischen der ersten und der zweiten Funkstation verlaufen, um stationäre netzseitige Repeater bzw. Relays handeln. Die Erfindung kann in Bezug auf einen bestimmten Pfad zwischen der ersten und der zweiten Funkstation angewendet werden, oder auch in Bezug auf mehrere von der ersten Funkstation ausgehende bzw. bei der ersten Funkstation endende Pfade, oder zusätzlich auch auf andere Pfade zwischen Funkstationen des Funkkommunikationssystems. Für jeden der zumindest zwei Sprünge zwischen der ersten und der zweiten Funkstation wird eine Teilmenge der Subträger des zur Verfügung stehenden Frequenzbandes verwendet. Die Zuweisung der Subträger an die verschiedenen Sprünge ist jedoch nicht statisch, sondern ändert sich mit der Zeit. Dies bedeutet, dass bei gleich bleibendem Pfad zwischen der ersten und der zweiten Funkstation, dass heißt bei gleich bleibenden Funkstationen, welche Nachrichten zwischen der ersten und der zweiten Funkstation weiterleiten, sich für zumindest einen der Sprünge die verwendeten Subträger zumindest einmal ändern. Dies kann zum Beispiel dadurch realisiert werden, dass für einen ersten Sprung zu Beginn die Subträger 1 bis 10 und für einen zweiten Sprung die Subträger 11 bis 20 verwendet werden, und zu einem späteren Zeitpunkt für den ersten Sprung die Subträger 1 bis 5 und für den zweiten Sprung die Subträger 6 bis 20.

In Weiterbildung der Erfindung erfolgt die Variation der Zusammensetzung in Abhängigkeit von einem Funkressourcenbedarf von mindestens einer Funkstation. Hierbei kann insbesondere der Funkressourcenbedarf der ersten Funkstation und/oder der zweiten Funkstation und/oder einer oder mehrerer Funkstationen der Sprünge zwischen der ersten und der zweiten Funkstation berücksichtigt werden. Zur Berücksichtigung des Funkressourcenbedarfs einer Funkstation kann diese Funkstation beispielsweise eine Anforderungsnachricht nach Funkressourcen versenden, welche den Umfang und/oder die Art der benötigten Funkressourcen angibt.

Zusätzlich oder alternativ kann die Variation der Zusammensetzung in Abhängigkeit von Funkübertragungsbedingungen erfolgen. Hierbei können insbesondere die Funkübertragungsbedingungen, welche in Bezug auf die mindestens zwei Sprünge aktuell vorliegen, einbezogen werden. Erfährt beispielsweise die Funkübertragung über einen bestimmten Sprung aufgrund schlechter Funkübertragungsbedingungen große Störungen, so ist es vorteilhaft, für diesen Sprung andere Subträger oder eine größere Anzahl an Subträgern zu verwenden. Auf diese Weise kann die Zusammensetzung der für einen Sprung verwendeten Teilmenge der Subträger den aktuellen Funkübertragungsdingungen, welche z.B. durch Interferenzen aufgrund anderer Funkübertragungen und Abschattungseffekte bestimmt werden, angepasst werden.

Zusätzlich oder alternativ kann die Variation der Zusammensetzung von zumindest einer der verwendeten Teilmengen in Abhängigkeit von der Variation der Zusammensetzung von zumindest einer anderen der verwendeten Teilmengen erfolgen. Dies erweist sich z.B. dann als vorteilhaft, wenn die für die einzelnen Sprünge verwendeten Subträger sich mit einem bestimmten Wiederverwendungsabstand, z.B. nach drei Sprüngen, wiederholen. Eine Variation der Subträger auf einem Sprung kann somit eine Variation der Subträger auf einem anderen Sprung zur Folge haben, wenn für die beiden Sprünge die gleichen Subträger verwendet werden, da die beiden Sprünge den bestimmen Wiederverwendungsabstand aufweisen.

Vorteilhaft ist es, wenn für jeden Sprung eine mit den Teilmengen der anderen Sprünge nicht überlappende Teilmenge der Subträger verwendet wird. Dies bedeutet, dass kein Subträger existiert, welcher von mehr als einem der Sprünge zwischen der ersten und der zweiten Funkstation zur Funkübertragung verwendet wird. Alternativ können für zumindest zwei nicht benachbarte, d.h. für zwei nicht direkt aufeinander folgende Sprünge überlappende Teilmengen der Subträger verwendet werden. Eine Überlappung von Teilmengen liegt vor, wenn die Teilmengen vollständig oder zumindest teilweise übereinstimmen. Existieren beispielsweise drei Sprünge zwischen der ersten und der zweiten Funkstation, so ist es möglich, dass für den ersten und den dritten Sprung zumindest teilweise die gleichen Subträger verwendet werden, während für den zweiten Sprung Subträger verwendet werden, welcher sich sowohl von den Subträgern des ersten Sprungs als auch von den Subträgern des zweiten Sprungs vollständig unterscheiden.

Besonders vorteilhaft ist es, wenn eine Zuweisung der Teilmengen durch die erste Funkstation erfolgt. In diesem Fall entscheidet die erste Funkstation darüber, wie sich die für die verschiedenen Sprünge verwendeten Teilmengen zusammensetzen, und teilt dies entweder direkt oder über andere Funkstationen den an der Funkübertragung über die Sprünge beteiligten Funkstationen mit. Hierbei handelt es sich um eine zentrale Zuweisung der Subträger zu den Sprüngen, bei der ersten Funkstation handelt es sich hierbei vorzugsweise um eine netzseitige Funkstation.

Gemäß einer Ausgestaltung der Erfindung empfängt die erste Funkstation vor der Zuweisung der Teilmengen Informationen über Funkübertragungsbedingungen betreffend die Funkübertragung über mindestens einen der Sprünge, vorzugsweise über alle Sprünge zwischen der ersten und der zweiten Funkstation. Die Funkübertragungsbedingungen können von den Funkstationen, welche die Nachrichten über die Sprünge übertragen, gemessen werden. Daraufhin können diese Funkstationen Informationen über die Funkübertragungsbedingungen über die Sprünge an die erste Funkstation übertragen. Die erste Funkstation kann die Informationen über die Funkübertragungsbedingungen verwenden, um eine geeignete Zuweisung der Teilmengen zu bestimmen.

Vorteilhaft ist es, wenn Nachrichten zwischen der ersten Funkstation und der zweiten Funkstation über mehrere Sprünge jeweils zwischen Funkstationen benachbarter Hierarchiestufen übertragen werden, wobei die erste Funkstation der höchsten Hierarchiestufe angehört und die Funkstationen jeder niedrigeren Hierarchiestufe jeweils direkt mit einer Funkstation der nächst höheren Hierarchiestufe kommunizieren können, jedoch nicht mit Funkstationen höherer als der nächst höheren Hierarchiestufe. Die erste Funkstation weist den Funkstationen der zweiten Hierarchiestufe eine Teilmenge der ihr zugewiesenen Subträger zur Kommunikation mit Funkstationen der dritten Hierarchiestufe zu. Der ersten Funkstation sind Subträger zugewiesen, wobei diese Zuweisung zum Beispiel durch Vereinbarung zwischen verschiedenen Funkstationen zustande kommen, oder in dem Funkkommunikationssystem fest vorgegeben sein kann. Neben der ersten Funkstation existieren Funkstationen einer zweiten Hierarchiestufe, welche direkt mit der ersten Funkstation kommunizieren können. Die erste Funkstation weist einen Teil der ihr zugewiesenen Subträger diesen Funkstationen der zweiten Hierarchiestufe zu. Die Zuweisung erfolgt für eine Kommunikation der Funkstationen der zweiten Hierarchiestufe mit Funkstationen der dritten Hierarchiestufe.

Weiterhin ist es vorteilhaft, wenn zumindest eine Funkstation der zweiten Hierarchiestufe eine Teilmenge der ihr zugewiesenen Subträger Funkstationen der dritten Hierarchiestufe zur Kommunikation mit Funkstationen der vierten Hierarchiestufe zuweist. Im Allgemeinen kann eine Funkstation ihr zugewiesene Subträger und/oder ihr nicht zugewiesene Subträger Funkstationen der nächst niedrigeren Hierarchiestufe zur Kommunikation mit Funkstationen der nächst niedrigeren als der nächst niedrigeren Hierarchiestufe zuweisen. Hierbei handelt es sich um eine hierarchische Funkressourcenzuweisung, wobei jeweils eine Funkstation einer bestimmten Hierarchiestufe für die Zuweisung von Subträgern an Funkstationen der nächst niedrigeren Hierarchiestufe zuständig ist. Die Zuweisung kann sich auf Subträger, welche der Funkstation der bestimmten Hierarchiestufe zugewiesen sind, beziehen, oder auch auf ihr nicht zugewiesene Subträger. Bei einem derartigen hierarchischen Verfahren zur Funkressourcenzuweisung handelt es sich um ein dezentrales Verfahren, da nicht eine einzige Funkstation für die Zuweisung der Subträger an die einzelnen Sprünge verantwortlich ist, sondern eine Mehrzahl von Funkstationen bei der Funkressourcenzuweisung mitwirken.

Eine erste erfindungsgemäße Funkstation weist Mittel auf zum Kommunizieren mit einer ersten anderen Funkstation unter Verwendung einer ersten Teilmenge der Subträger, um zum Kommunizieren mit einer zweiten anderen Funkstation unter Verwendung einer zweiten von der ersten Teilmenge unterschiedlichen Teilmenge der Subträger. Hierbei variiert die Zusammensetzung von zumindest einer Teilmenge mit der Zeit.

Vorteilhaft ist es, wenn die erste erfindungsgemäße Funkstation weiterhin Mittel aufweist zum Empfangen und Verarbeiten einer Nachricht von der ersten anderen Funkstation betreffend einer Zuweisung an die erste erfindungsgemäße Funkstation einer dritten Teilmenge von Subträgern, und Mittel zum Zuweisen einer Teilmenge der dritten Teilmenge von Subträgern an die zweite andere Funkstation, wobei die dritte Teilmenge aus der Teilmenge der dritten Teilmenge und der zweiten Teilmenge besteht.

Eine zweite erfindungsgemäße Funkstation weist Mittel auf zum Versenden und Empfangen von Nachrichten, welche zwischen einer weiteren Funkstation und der Funkstation über mehrere Sprünge zwischen jeweils benachbarten Funkstationen übertragen werden, und Mittel zum Zuweisen von Telmengen von Subträgern zu den Sprüngen, wobei es sich jeweils bei benachbarten Sprüngen um nicht überlappende Teilmengen handelt.

Die beiden erfindungsgemäßen Funkstationen eignen sich insbesondere zur Durchführung des erfindungsgemäßen Verfahrens, wobei dies auch auf die Ausgestaltung und Weiterbildung zutreffen kann. Hierzu können sie weitere geeignete Mittel aufweisen. Besonders vorteilhaft ist es, wenn es sich bei den erfindungsgemäßen Funkstationen um stationäre netzseitige Funkstationen handelt.

Im folgenden wird die Erfindung anhand eines Ausführungsbeispiels näher erläutert. Dabei zeigen:
- Figur 1:: einen Ausschnitt aus einem Funkkommunikationssys- tem,
- Figur 2:: eine erfindungsgemäße Aufteilung eines Frequenz- bandes.

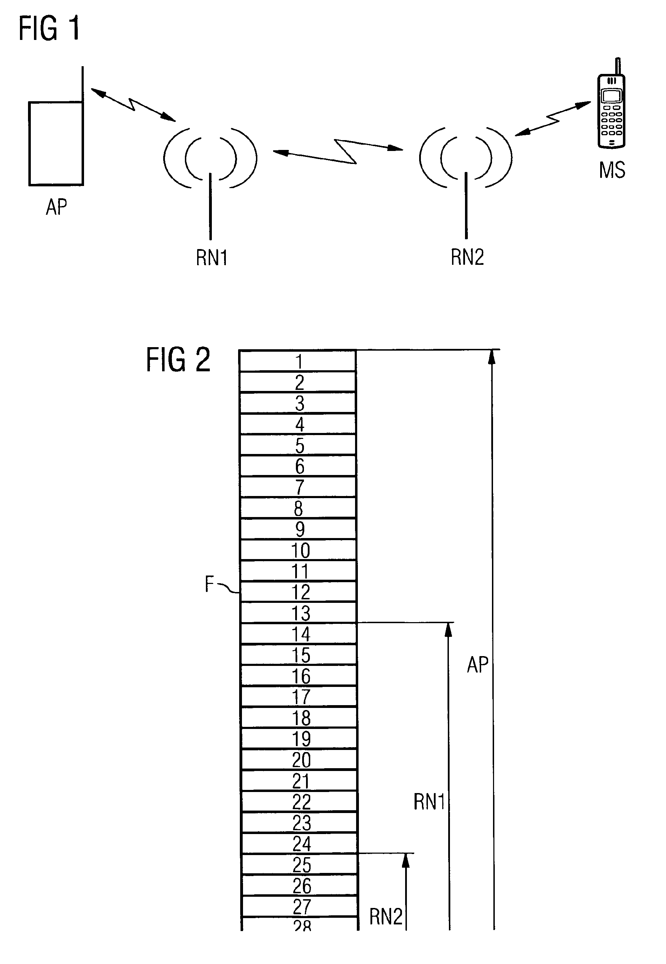

Der in Figur 1 dargestellte Ausschnitt aus einem Funkkommunikationssystem umfasst den Funkzugangspunkt AP, die beiden Relays RN1 und RN2, sowie die Teilnehmerstation MS. Die Relays RN1 und RN2 sind netzseitige stationäre Funkstationen, welche der Weiterleitung von Nachrichten zwischen Teilnehmerstationen und dem Funkzugangspunkt AP dienen. Bei dem Funkzugangspunkt AP kann es sich z.B. um eine netzseitige Funkstation eines WLAN (AP: Access Point) handeln. Der Funkzugangspunkt AP kann, in Figur 1 nicht dargestellt, an ein Kernnetz oder an weitere Kommunikationssysteme, wie z.B. an das Internet, angeschlossen sein. Das Funkkommunikationssystem kann weitere Funkzugangspunkte, Relays und Teilnehmerstationen beinhalten, welche der Übersichtlichkeit halber nicht in Figur 1 dargestellt sind. Insbesondere können die Relays nicht nur Bestanteil des Pfades zwischen dem Funkzugangspunkt AP und der Teilnehmerstation MS, sondern mehrerer Pfade zwischen dem Funkzugangspunkt AP oder einem anderen Funkzugangspunkt und verschiedenen Teilnehmerstationen sein.

Eine direkte Kommunikation ist zwischen dem Funkzugangspunkt AP und dem Relay RN1, sowie zwischen den Relays RN1 und RN2, und zwischen dem Relay RN2 und der Teilnehmerstation MS möglich. Eine Nachrichtenübertragung zwischen der Teilnehmerstation MS und dem Funkzugangspunkt AP erfolgt, da sich die Teilnehmerstation MS für eine direkte Kommunikation zu weit entfernt von dem Funkzugangspunkt AP aufhält, über drei Sprünge: bei einer Nachrichtenübertragung in Abwärtsrichtung, d.h. von dem Funkzugangspunkt AP zu der Teilnehmerstation MS, wird die Nachricht zuerst von dem Funkzugangspunkt AP zu dem Relay RN1, dann von dem Relay RN1 zu dem Relay RN2, und schließlich von dem Relay RN2 zu der Teilnehmerstation MS übertragen. Für die Nachrichtenübertragung in Aufwärtsrichtung, d.h. von der Teilnehmerstation MS zu dem Funkzugangspunkt AP, gilt das umgekehrte.

In dem Funkkommunikationssystem steht das in Figur 2 dargestellte Frequenzband F zur Verfügung, welches in 30 Subträger aufgeteilt ist, durch horizontale Balken mit der Nummerierung 1 bis 30 symbolisiert. Es wird ein OFDMA-Separierungsverfahren angewandt (OFDMA: Orthogonal Frequency Division Multiple Access), d.h. die Signale werden unter Verwendung des OFDM-Verfahrens übertragen, wobei Nachrichten verschiedener Sender durch die Verwendung verschiedener OFDM-Subträger unterscheidbar sind. Für die Kommunikation über den ersten Sprung, d.h. zwischen dem Funkzugangspunkt AP und dem Relay RN1 oder zwischen dem Funkzugangspunkt AP und anderen Funkstationen, stehen alle 30 Subträger zur Verfügung, es werden jedoch nur die Subträger 1 bis 13 eingesetzt. Die anderen Subträger 14 bis 30 weist der Funkzugangspunkt AP dem Relay RN1 zu. Somit stehen für die Kommunikation über den zweiten Sprung, d.h. zwischen dem Relay RN1 und dem Relay RN2 oder zwischen dem Relay RN1 und anderen Funkstationen die Subträger 14 bis 30 zur Verfügung, es werden jedoch nur die Subträger 14 bis 24 eingesetzt. Die anderen Subträger 25 bis 30 weist der Relay RN1 dem Relay RN2 zu zur Kommunikation des Relays RN2 mit der Teilnehmerstation MS oder mit anderen Funkstationen. Somit werden für die Kommunikation zwischen dem Funkzugangspunkt AP und dem Relay RN1 die Subträger 1 bis 13, zwischen dem Relay RN1 und dem Relay RN2 die Subträger 14 bis 24, und zwischen dem Relay RN2 und der Teilnehmerstation MS die Subträger 25 bis 30 verwendet.

Die Zuweisung der Subträger erfolgt hierarchisch, indem jede Funkstation, d.h. zuerst der Funkzugangspunkt AP, dann der Relay RN1, gefolgt von dem Relay RN2, einen Teil der ihr zugewiesenen Subträger der folgenden Funkstation zuweist. Die Funkstationen bilden hierbei eine Hierarchie, wobei der Funkzugangspunkt AP Bestandteil der höchsten Hierarchiestufe ist, der Relay RN1 Bestandteil der zweiten Hierarchiestufe und der Relay RN2 Bestandteil der dritten Hierarchiestufe. Die einer Funkstation einer Hierarchiestufe zugewiesenen Subträger bestehen aus einer Teilmenge der der Funkstation der nächst höheren Hierarchiestufe zugewiesenen Subträger. Somit weist eine Funkstation der Hierarchiestufe n Funkstationen der Hierarchiestufe n-1 Subträger zu zur Kommunikation mit Funkstationen der Hierarchiestufe n-2.

Die beschriebenen hierarchische Vergabe von Funkressourcen ist auch auf den Fall mehrerer Funkstationen pro Hierarchiestufe anwendbar. So bilden alle Funkzugangspunkte die oberste Hierarchiestufe, alle Relays, welche direkt mit einem Funkzugangspunkt kommunizieren können, die zweite Hierarchiestufe, alle Relays, welche direkt mit einem Relay der zweiten Hierarchiestufe, nicht jedoch mit einem Funkzugangspunkt kommunizieren können, die dritte Hierarchiestufe, usw. Die Relays der zweite Hierarchiestufe werden demjenigen Funkzugangspunkt zugeordnet, mit welchem sie direkt kommunizieren können, die Relays der dritten Hierarchiestufe dem gleichen Funkzugangspunkt wie derjenige Relay der zweiten Hierarchiestufe, mit welchem sie direkt kommunizieren können, usw. In Bezug auf die Figur 2 bedeutet dies, dass ein bestimmter Funkzugangspunkt die Subträger 1 bis 13 zur Kommunikation mit allen ihm zugeordneten Relays der zweiten Hierarchiestufe oder mit Teilnehmerstationen verwendet, und die Subträger 14 bis 30 allen dem bestimmten Funkzugangspunkt zugeordneten Relays der zweiten Hierarchiestufe zuweist. Jeder der dem bestimmten Funkzugangspunkt zugeordneten Relays der zweiten Hierarchiestufe kann eine Teilmenge der ihm zugewiesenen Subträger 14 bis 30 den dem bestimmten Funkzugangspunkt zugeordneten Relays der dritten Hierarchiestufe, welche mit ihm direkt kommunizieren, zuweisen, usw.

Durch die hierarchische Funkressourcenverteilung ist sichergestellt, dass eine Funkstation einer bestimmten Hierarchiestufe die Kommunikation einer Funkstation einer höheren Hierarchiestufe nicht stören kann. Denn jede Funkstation ist nur befugt, über die Zuweisung von ihr zugewiesenen Subträgern, welche von Funkstationen der höheren Hierarchiestufen nicht verwendet werden, zu entscheiden.

Alternativ zu der bislang beschriebenen dezentralen Vergabe von Funkressourcen, gemäß welcher jede Funkstation einen Teil der ihr zugewiesene Funkressourcen weiter zuweist, ist auch eine zentrale Zuweisung von Funkressourcen möglich. Hierzu entscheidet der Funkzugangspunkt AP über die Verteilung der Funkressourcen. So kann der Funkzugangspunkt AP z.B. gemäß Figur 2 dem Relay RN1 mitteilen, dass ihm für die Kommunikation mit dem Relay RN2 oder mit Funkstationen der gleichen Hierarchiestufe wie das Relay RN2 die Subträger 14 bis 24 zur Verfügung stehen, und dem Relay RN2 zur Kommunikation mit Funkstationen der gegenüber dem Relay RN2 nächst niedrigeren Hierarchiestufe die Subträger 25 bis 30. Der Relay RN1 informiert daraufhin den Relay RN2 über die dem Relay RN2 zugewiesenen Funkressourcen. Die zentrale Verteilung der Funkressourcen hat den Vorteil, dass die Intelligenz zur Entscheidung über die Zuweisung bei der zentralen verteilenden Einrichtung, gemäß dem konkreten Beispiel bei dem Funkzugangspunkt AP, konzentriert ist. Die Relays RN1 und RN2 können hierdurch unaufwendiger ausgestaltet sein.

Dadurch, dass für benachbarte Sprünge unterschiedliche, sich nicht überschneidende Gruppen von Subträgern eingesetzt werden, ist eine rasche Nachrichtenübertragung entlang der Multi-Hop-Strecke möglich. Denn aufgrund der Verwendung unterschiedlichen Subträger für benachbarte Sprünge kann die Nachrichtenübertragung über die verschiedenen Sprünge gleichzeitig stattfinden. Auf diese Weise kann beispielsweise eine von dem Funkzugangspunkt AP stammende Nachricht, welche von dem Relay RN1 empfangen wird und an die Teilnehmerstation MS zu übertragen ist, sofort von dem Relay RN1 an den Relay RN2 weitergeleitet werden, da die Versendung einer Nachricht auf dem zweiten Sprung nicht die Kommunikation auf dem ersten Sprung stört.

Gemäß der bisherigen Erläuterungen werden mehreren Funkstationen pro Hierarchiestufe, welche der gleichen Funkstation der nächst höheren Hierarchiestufe zugeordnet sind, jeweils die gleichen Subträger zugewiesen. Diese Konstellation entsteht sowohl bei der zentralen als auch bei der dezentralen Vergabe der Funkressourcen. Um durch die gemeinsame Verwendung von Subträgern entstehende Interferenzen zu vermeiden, führen die Funkstationen, welche sich die Subträger teilen, geeignete Verfahren zum Zugriff auf die Funkressourcen durch, so z.B. ein CSMA/CA Verfahren (Carrier Sense Multiple Access / Collision Avoidance).

Alternativ zur bisherigen Erläuterung ist es auch möglich, dass verschiedenen Funkstationen pro Hierarchiestufe, welche der gleichen Funkstation der nächst höheren Hierarchiestufe zugeordnet sind, unterschiedliche Subträger zugewiesen werden. Dies kann bei der dezentralen Vergabe der Funkressourcen dadurch realisiert werden, dass eine Funkstation einer bestimmten Hierarchiestufe einer ersten Funkstation der nächst niedrigeren Hierarchiestufe, welche direkt mit ihr kommuniziert, eine erste Untermenge von Subträgern zuweist, und einer zweiten Funkstation der gleichen nächst niedrigeren Hierarchiestufe, welche direkt mit ihr kommuniziert, eine zweite Untermenge von Subträgern zuweist. Analog kann auch der Funkzugangspunkt bei der zentralen Funkressourcenvergabe Funkstationen einer Hierarchiestufe, welche der gleichen Funkstation der nächst höheren Hierarchiestufe zugeordnet sind, unterschiedliche Subträger zuweisen.

Entscheidet der Funkzugangspunkt AP zentral über die Vergabe der Funkressourcen, ist auch eine mehrfache Verwendung von Subträgern möglich. So kann der Funkzugangspunkt AP beispielsweise dem Relay RN1 die Subträger 14 bis 24 zuweisen, und dem Relay RN2 die Subträger 25 bis 30 und weiterhin die Subträger 10 bis 13, welche er auch zur Kommunikation verwendet. Hierbei wird berücksichtigt, dass benachbarte Sprünge nicht die gleichen Subträger verwenden, um Interferenzen zu vermeiden.

Eine mehrfache Vergabe von Subträgern ist auch bei der dezentralen Zuweisung von Subträgern möglich, wobei dies einer Abkehr vom Prinzip der hierarchischen Ressourcenzuweisung entspricht. So kann beispielsweise der Relay RN1 entscheiden, dem Relay RN2 die Subträger 25 bis 30 und 10 bis 13 zuzuweisen. Hierdurch wird dem Effekt entgegengewirkt, dass aufgrund der hierarchischen Funkressourcenvergabe die Anzahl der maximal zur Verfügung stehenden Subträger von Hierarchiestufe zu Hierarchiestufe abnimmt. Wird dezentral über die mehrfache Vergabe von Subträgern entschieden, sollte die jeweilige Funkstation vor der Zuweisung von bereits zugewiesenen Subträgern Messungen zur Abschätzung der potentiell durch die Mehrfachvergabe entstehenden Interferenz durchführen. Auch kann der Funkzugangspunkt AP in die dezentrale Vergabe von bereits zugewiesenen Subträgern eingreifen, indem er z.B. mitteilt, ab welcher Hierarchiestufe von ihm verwendete Subträger erneut zugewiesen werden dürfen.

Gemäß der Erfindung ist die Aufteilung der Subträger an die verschiedenen Sprünge nicht statisch, sondern mit der Zeit verändert. Diese Dynamik der Zuweisung der Subträger kann sowohl im Rahmen des dezentralen als auch des zentralen Ressourcenvergabeverfahrens angewandt werden. So ist es beispielsweise bei der dezentralen Zuweisung möglich, dass eine Funkstation einer bestimmten Hierarchiestufe eine bestimmte Anzahl an Subträgern Funkstationen der nächst niedrigeren Hierarchiestufe zuweist. Im folgenden nehme der Bandbreitenbedarf der Funkstation der bestimmten Hierarchiestufe zu, da diese eine Vielzahl an Nachrichten zu versenden hat. Aufgrund dessen erfolgt eine Neuzuweisung von Subträgern an die Funkstationen der nächst niedrigeren Hierarchiestufe, wobei diesen eine kleinere Anzahl an Subträgern zugewiesen werden. Auf diese Weise kann die Ressourcenverteilung im Funkkommunikationssystem den aktuellen Gegebenheiten angepasst werden, so z.B. dem Ressourcenbedarf aufgrund zu übertragender Nachrichten oder den Funkausbreitungsbedingungen.

Eine Umverteilung der Funkressourcen durch den Funkzugangspunkt AP ist besonders vorteilhaft in Kombination mit Anforderungsnachrichten nach Funkressourcen, welche die Funkstationen niedrigerer Hierarchiestufen senden. So kann der Relay RN1 den Funkzugangspunkt AP direkt über seinen Funkressourcenbedarf informieren, während der Relay RN2 eine Nachricht zur Anforderung eines bestimmten Funkressourcenumfangs über den Relay RN1 an den Funkzugangspunkt AP übermittelt. Neben dem Funkressourcenbedarf sind die aktuellen Übertragungsbedingungen ein maßgeblicher Faktor zur Entscheidung über die Verteilung der Subträger durch den Funkzugangspunkt AP.

Die Erfindung weist den Vorteil auf, dass die Verteilung der Funkressourcen in Form der zur Verfügung stehenden Subträger an verschiedene Sprünge einer Multi-Hop-Übertragung nicht fix ist, sondern dynamisch den aktuellen Gegebenheiten angepasst werden kann. Auf diese Weise können die Subträger auf die zum jeweiligen Zeitpunkt vorteilhafteste Weise auf die einzelnen Sprünge verteilt werden. Eine starre Verteilung hingegen würde zu Einbußen bei der Effizienz der Nachrichtenübertragung führen.

## Patentansprüche

1. Verfahren zur Kommunikation in einem Funkkommunikationssystem, bei welchem
zur Kommunikation ein in eine Mehrzahl an Subträgern (1, 2,...,30) aufgeteiltes Frequenzband (F) verwendet wird, Nachrichten zwischen einer ersten Funkstation (AP) und einer zweiten Funkstation (RN2, MS) über Funk über mehrere Sprünge zwischen jeweils benachbarten Funkstationen (AP, RN1, RN2, MS) übertragen werden,
wobei für jeden Sprung eine Teilmenge der Subträger (1, 2,...,30) verwendet wird, und
die Zusammensetzung von zumindest einer der verwendeten Teilmengen mit der Zeit variiert,
**dadurch gekennzeichnet,**
**dass** Nachrichten zwischen der ersten Funkstation (AP) und der zweiten Funkstation (RN2, MS) über mehrere Sprünge jeweils zwischen Funkstationen (AP, RN1, RN2, MS) benachbarter Hierarchiestufen übertragen werden, wobei die erste Funkstation (AP) der höchsten Hierarchiestufe angehört und die Funkstationen (RN1, RN2, MS) jeder niedrigeren Hierarchiestufe jeweils direkt mit einer Funkstation (AP, RN1, RN2) der nächst höheren Hierarchiestufe kommunizieren können, jedoch nicht mit Funkstationen höherer als der nächst höheren Hierarchiestufe, und
**dass** die erste Funkstation (AP) den Funkstationen (RN1) der zweiten Hierarchiestufe eine Teilmenge der ihr zugewiesenen Subträger (1, 2,...,30) zur Kommunikation mit den Funkstationen (RN2) der dritten Hierarchiestufe zuweist.

2. Verfahren nach Anspruch 1,
**dadurch gekennzeichnet,**
**dass** die Variation der Zusammensetzung in Abhängigkeit von einem Funkressourcenbedarf von zumindest einer Funkstation (AP, RN1, RN2, MS) erfolgt.

3. Verfahren nach Anspruch 1 oder 2,
**dadurch gekennzeichnet,**
**dass** die Variation der Zusammensetzung in Abhängigkeit von Funkübertragungsbedingungen erfolgt.

4. Verfahren nach einem der Ansprüche 1 bis 3,
**dadurch gekennzeichnet,**
**dass** die Variation der Zusammensetzung von zumindest einer der verwendeten Teilmengen in Abhängigkeit von der Variation der Zusammensetzung von zumindest einer anderen der verwendeten Teilmengen erfolgt.

5. Verfahren nach einem der Ansprüche 1 bis 4,
**dadurch gekennzeichnet,**
**dass** für jeden Sprung eine mit den Teilmengen der anderen Sprünge nicht überlappende Teilmenge der Subträger (1, 2,...,30) verwendet wird, oder
**dass** für zumindest zwei nicht benachbarte Sprünge überlappende Teilmengen der Subträger (1, 2,...,30) verwendet werden.

6. Verfahren nach einem der Ansprüche 1 bis 5,
**dadurch gekennzeichnet,**
**dass** eine Zuweisung der Teilmengen durch die erste Funkstation (AP) erfolgt.

7. Verfahren nach Anspruch 6,
**dadurch gekennzeichnet,**
**dass** die erste Funkstation (AP)vor der Zuweisung der Teilmengen Informationen über Funkübertragungsbedingungen betreffend die Funkübertragung über mindestens einen der Sprünge empfängt.

8. Verfahren nach einem der Ansprüche 1 bis 7,
**dadurch gekennzeichnet,**
**dass** zumindest eine Funkstation (RN1) der zweiten Hierarchiestufe eine Teilmenge der ihr zugewiesenen Subträger (14, 15,...,30) Funkstationen (RN2) der dritten Hierarchiestufe zur Kommunikation mit Funkstation (MS) der vierten Hierarchiestufe zuweist.

9. Verfahren nach einem der Ansprüche 1 bis 8,
**dadurch gekennzeichnet,**
**dass** eine Funkstation (AP, RN1) ihr zugewiesene Subträger (1, 2,...,30) und/oder ihr nicht zugewiesene Subträger (1, 2,...,30) Funkstationen (RN1, RN2) der nächst niedrigeren Hierarchiestufe zur Kommunikation mit Funkstationen (RN2, MS) der in Bezug auf die Funkstationen der nächst niedrigeren Hierarchiestufe nächst niedrigeren Hierarchiestufe zuweist.

10. Funkstation (RN1, RN2) zur Kommunikation in einem Funkkommunikationssystem, in welchem zur Kommunikation ein in eine Mehrzahl an Subträgern (1, 2,...,30) aufgeteiltes Frequenzband (F) verwendet wird, **gekennzeichnet durch** Mittel zum Kommunizieren mit einer ersten anderen Funkstation (AP, RN1) einer benachbarten höheren Hierarchiestufe unter Verwendung einer ersten Teilmenge der Subträger (1, 2,...,30) und zum Kommunizieren mit einer zweiten anderen Funkstation (RN2, MS) einer benachbarten niedrigeren Hierarchiestufe unter Verwendung einer zweiten von der ersten Teilmenge unterschiedlichen Teilmenge der Subträger (1, 2,...,30), wobei die Funkstation (RN1, RN2) direkt mit einer Funkstation (AP, RN1, RN2) der nächst höheren Hierarchiestufe kommunizieren kann, jedoch nicht mit Funkstationen höherer als der nächst höheren Hierarchiestufe,
wobei die Zusammensetzung von zumindest einer Teilmenge mit der Zeit variiert,
Mittel zum Empfangen und Verarbeiten einer Nachricht von der ersten anderen Funkstation (AP, RN1) betreffend eine Zuweisung an die Funkstation (RN1, RN2) einer dritten Teilmenge von Subträgern (1, 2,...,30), und
Mittel zum Zuweisen einer Teilmenge der dritten Teilmenge von Subträgern (1, 2,...,30) an die zweite andere Funkstation (RN2, MS) zur Kommunikation mit einer weiteren anderen Funkstation (MS) einer benachbarten niedrigeren Hierarchiestufe, wobei die Vereinigung der zweiten Teilmenge und der Teilmenge der dritten Teilmenge die dritte Teilmenge ergibt.

11. Funkkommunikationssystem zur Durchführung des Verfahrens nach einem der Ansprüche 1 bis 9,
umfassend eine Funkstation nach Anspruch 10.

## Claims

1. Method for communication in a radio communication system, in which
a frequency band (F) divided into a plurality of subcarriers (1, 2,...,30) is used for communication, messages are transmitted between a first radio station (AP) and a second radio station (RN2, MS) by radio in a plurality of hops between respectively adjacent radio stations (AP, RN1, RN2, MS),
a subset of the subcarriers (1, 2,...,30) being used for each hop and
the composition of at least one of the subsets used varying over time,
**characterised in that**
messages are transmitted between the first radio station (AP) and the second radio station (RN2, MS) in a plurality of hops respectively between radio stations (AP, RN1, RN2, MS) of adjacent hierarchical levels, the first radio station (AP) being associated with the highest hierarchical level and it being possible for the radio stations (RN1, RN2, MS) of each lower hierarchical level to in each case communicate directly with a radio station (AP, RN1, RN2) of the next higher hierarchical level but not with radio stations that are higher than the next higher hierarchical level, and **in that** the first radio station (AP) allocates to the radio stations (RN1) of the second hierarchical level a subset of the subcarriers (1, 2,...,30) allocated to it for communication with the radio station (RN2) of the third hierarchical level.

2. Method according to claim 1, **characterised in that** the composition is varied as a function of a radio resource requirement of at least one radio station (AP, RN1, RN2, MS).

3. Method according to claim 1 or 2, **characterised in that** the composition is varied as a function of radio transmission conditions.

4. Method according to any one of claims 1 to 3, **characterised in that** the composition of at least one of the subsets used is varied as a function of the variation in the composition of at least another of the subsets used.

5. Method according to any one of claims 1 to 4, **characterised in that** a subset of the subcarriers (1, 2,...,30) that does not overlap the subsets of the other hops is used for each hop, or **in that** overlapping subsets of the subcarriers (1, 2,..., 30) are used for at least two non-adjacent hops.

6. Method according to any one of claims 1 to 5, **characterised in that** the subsets are allocated by the first radio station (AP).

7. Method according to claim 6, **characterised in that** before allocation of the subsets the first radio station (AP) receives information about radio transmission conditions relating to radio transmission in at least one of the hops.

8. Method according to any one of claims 1 to 7, **characterised in that** at least one radio station (RN1) of the second hierarchical level allocates a subset of the subcarriers (14, 15,...,30) allocated to it to radio stations (RN2) of the third hierarchical level for communication with radio station (MS) of the fourth hierarchical level.

9. Method according to any one of claims 1 to 8, **characterised in that** a radio station (AP, RN1) allocates subcarriers (1, 2,...,30) allocated to it and/or subcarriers (1, 2,...,30) not allocated to it to radio stations (RN1, RN2) of the next lower hierarchical level for communication with radio stations (RN2, MS) of the next lower hierarchical level in relation to radio stations of the next lower hierarchical level.

10. Radio station (RN1, RN2) for communication in a radio communication system, in which a frequency band (F) divided into a plurality of subcarriers (1, 2,...,30) is used for communication, **characterised by**
means for communicating with a first, different radio station (AP, RN1) of an adjacent, higher hierarchical level by using a first subset of the subcarriers (1, 2,...,30) and for communicating with a second, different radio station (RN2, MS) of an adjacent, lower hierarchical level by using a second subset of the subcarriers (1, 2,...,30) that is different from the first subset, the radio station (RN1, RN2) being able to communicate directly with a radio station (AP, RN1, RN2) of the next higher hierarchical level but not with radio stations that are higher than the next higher hierarchical level,
the composition of at least one subset varying over time, means for receiving and processing a message from the first, different radio station (AP, RN1) relating to an allocation to the radio station (RN1, RN2) of a third subset of subcarriers (1, 2,...,30), and
means for allocating a subset of the third subset of subcarriers (1, 2,...,30) to the second, different radio station (RN2, MS) for communication with another radio station (MS) of an adjacent, lower hierarchical level, the combination of the second subset and the subset of the third subset giving rise to the third subset.

11. Radio communication system for carrying out the method according to any one of claims 1 to 9, comprising a radio station according to claim 10.

## Revendications

1. Procédé de communication dans un système de radiocommunication, dans lequel
une bande de fréquences (F) divisée en une pluralité de sous-porteuses (1, 2, ..., 30) est utilisée pour la communication, des messages sont transmis par radio entre une première station radio (AP) et une deuxième station radio (RN2, MS) en effectuant plusieurs sauts entre des stations radio (AP, RN1, RN2, MS) à chaque fois voisines,
un sous-ensemble des sous-porteuses (1, 2, ..., 30) étant utilisé pour chaque saut et
la composition d'au moins un des sous-ensembles utilisés variant dans le temps,
**caractérisé en ce que**
des messages sont transmis entre la première station radio (AP) et la deuxième station radio (RN2, MS) en effectuant plusieurs sauts à chaque fois entre des stations radio (AP, RN1, RN2, MS) de niveaux hiérarchiques voisins, la première station radio (AP) appartenant au niveau hiérarchique le plus élevé et les stations radio (RN1, RN2, MS) de chaque niveau hiérarchique inférieur pouvant communiquer à chaque fois directement avec une station radio (AP, RN1, RN2) du niveau hiérarchique immédiatement supérieur, mais pas avec des stations radio de niveau supérieur au niveau hiérarchique immédiatement supérieur et
**en ce que** la première station radio (AP) affecte aux stations radio (RN1) du deuxième niveau hiérarchique un sous-ensemble des sous-porteuses (1, 2, ..., 30) qui lui sont attribuées pour communiquer avec les stations radio (RN2) du troisième niveau hiérarchique.

2. Procédé selon la revendication 1, **caractérisé en ce que** la variation de la composition se fait en fonction d'un besoin en ressources radio d'au moins une station radio (AP, RN1, RN2, MS).

3. Procédé selon la revendication 1 ou 2, **caractérisé en ce que** la variation de la composition se fait en fonction de conditions de transmission radio.

4. Procédé selon l'une des revendications 1 à 3, **caractérisé en ce que** la variation de la composition d'au moins un des sous-ensembles utilisés se fait en fonction de la variation de la composition d'au moins un autre des sous-ensembles utilisés.

5. Procédé selon l'une des revendications 1 à 4, **caractérisé en ce que**, pour chaque saut, on utilise un sous-ensemble des sous-porteuses (1, 2, ..., 30) qui ne se superpose pas aux sous-ensembles des autres sauts ou
**en ce que** l'on utilise des sous-ensembles des sous-porteuses (1, 2, ..., 30) qui se superposent pour au moins deux sauts non consécutifs.

6. Procédé selon l'une des revendications 1 à 5, **caractérisé en ce qu'**une affectation des sous-ensembles est réalisée par la première station radio (AP).

7. Procédé selon la revendication 6, **caractérisé en ce que** la première station radio (AP) reçoit, avant l'affectation des sous-ensembles, des informations sur les conditions de transmission radio concernant la transmission radio par le biais d'au moins un des sauts.

8. Procédé selon l'une des revendications 1 à 7, **caractérisé en ce qu'**au moins une station radio (RN1) du deuxième niveau hiérarchique affecte un sous-ensemble des sous-porteuses (14, 15, ..., 30) qui lui sont attribuées à des stations radio (RN2) du troisième niveau hiérarchique pour communiquer avec une station radio (MS) du quatrième niveau hiérarchique.

9. Procédé selon l'une des revendications 1 à 8, **caractérisé en ce qu'**une station radio (AP, RN1) affecte des sous-porteuses (1, 2, ..., 30) qui lui sont attribuées et/ou des sous-porteuses (1, 2, ..., 30) qui ne lui sont pas attribuées à des stations radio (RN1, RN2) du niveau hiérarchique immédiatement inférieur pour communiquer avec des stations radio (RN2, MS) du niveau hiérarchique immédiatement inférieur par rapport aux stations radio du niveau hiérarchique immédiatement inférieur.

10. Station radio (RN1, RN2) pour la communication dans un système de radiocommunication dans lequel une bande de fréquences (F) divisée en une pluralité de sous-porteuses (1, 2, ..., 30) est utilisée pour la communication, **caractérisée par**
des moyens pour communiquer avec une première autre station radio (AP, RN1) d'un niveau hiérarchique supérieur voisin en utilisant un premier sous-ensemble des sous-porteuses (1, 2, ..., 30) et pour communiquer avec une deuxième autre station radio (RN2, MS) d'un niveau hiérarchique inférieur voisin en utilisant un deuxième sous-ensemble des sous-porteuses (1, 2, ..., 30) différent du premier sous-ensemble, la station radio (RN1, RN2) pouvant communiquer directement avec une station radio (AP, RN1, RN2) du niveau hiérarchique immédiatement supérieur, mais pas avec des stations radio de niveau supérieur au niveau hiérarchique immédiatement supérieur,
la composition d'au moins un sous-ensemble variant dans le temps,
des moyens pour recevoir et traiter un message de la première autre station radio (AP, RN1) concernant une affectation à la station radio (RN1, RN2) d'un troisième sous-ensemble de sous-porteuses (1, 2, ..., 30) et
des moyens pour affecter un sous-ensemble du troisième sous-ensemble de sous-porteuses (1, 2, ..., 30) à la deuxième autre station radio (RN2, MS) pour communiquer avec une autre station radio supplémentaire (MS) d'un niveau hiérarchique inférieur voisin, la réunion du deuxième sous-ensemble et du sous-ensemble du troisième sous-ensemble donnant le troisième sous-ensemble.

11. Système de radiocommunication pour l'exécution du procédé selon l'une des revendications 1 à 9, comprenant une station radio selon la revendication 10.
